# EUROPEAN PATENT SPECIFICATION

(11) **EP 2 206 343 B1**
(45) Date of publication and mention of the grant of the patent: **27.07.2016**
(21) Application number: 08837291.7
(22) Date of filing: 26.09.2008
(51) Int. Cl.: H04N 7/025

(54) **SYSTEMS AND METHODS FOR GENERATING AND/OR PRESENTING A CONDENSED LIST OF CHANNELS**
SYSTEME UND METHODEN ZUR ERZEUGUNG UND/ODER DARSTELLUNG EINER GEKÜRZTEN LISTE VON KANAELEN
SYSTÈMES ET PROCÉDÉS DE GÉNÉRATION ET/OU DE PRÉSENTATION D'UNE LISTE CONDENSÉE DE CANAUX

(30) Priority: 12.10.2007 US 871306
(43) Date of publication of application: 14.07.2010
(73) Proprietor: EchoStar Technologies L.L.C., Englewood, CO 80112 (US)
(72) Inventor: ST JOHN-LARKIN, David Christopher, Denver, Colorado 80238 (US)
(74) Representative: Beck Greener
(86) International application number: PCT/US2008/077914
(87) International publication number: WO 2009/048753

(56) References cited:
- US-A1- 2003 217 365
- US-A1- 2003 217 365
- US-A1- 2005 210 530
- US-A1- 2005 210 530
- US-B1- 6 769 127

## Description

The present invention relates to a method, system and computer readable storage medium for generating an abridged list of channels for display on a client device of a broadcasting system.

Embodiments relate generally to presentation of channels to a user via a client device, such as a set top box (STB), digital video recorder (DVR) or similar device, and to providing a condensed list of channels via such devices.

The proliferation of subscription television programming, the increasing number of available channels, and the corresponding increase in television programming have led to continued development of onscreen programming directories and guides. Such onscreen programming solutions, collectively referred to herein as electronic program guides (EPGs), have ranged from programming information for each channel scrolling vertically across the screen to user controllable interfaces that allow users to examine scheduling information describing television programming to be broadcast in the future.

In addition to allowing direct selection of a channel, for example, by entering the channel number using a remote control, client devices may allow a user to select a channel from a listing of channels displayed on a television, monitor or other display device. Although only some channels may be displayed at a given time via the EPG, the EPG includes a listing of all channels that may be accessed from the EPG and displayed, for example, by scrolling or entering a channel number while viewing the guide.

Known EPGs provide access to programming information in various ways. However, conventional EPGs do not present a condensed list of channels to the user of a client device. Absent being set up by the user, such as to exclude channels that a client device is not configured to receive, the EPG of the client device is configured to display all available channels to the user of the client device.

The ever increasing number of channels available for viewing and/or recording via a client device may present a user with an overwhelming number of choices. Although the number of channels that a client device is configured to receive may be reduced, this is not typically an acceptable solution. Thus, there is a need to present a user with a condensed list of channels, for example, that is of particular interest to the user.

According to a first aspect of the present invention, there is provided a method of generating an abridged list of channels for display on a client device of a broadcasting system, the method comprising:
monitoring at a broadcast service provider channels viewed via a group of client devices where each is configured to receive a plurality of channels, wherein the group contains all client devices in a particular geographic or broadcast service area; and
the broadcast service provider selecting a subset of the plurality of channels based on the amount of time each channel has been viewed and on the frequency with which each channel has been viewed, characterised by
associating the subset together to generate an abridged list of the available channels for display; and,
transmitting the generated abridged list of channels to the client devices, such that the generated abridged list is available to each client device in the group, for display on a display of the client devices.

According to a second aspect of the present invention, there is provided a system for generating an abridged list of channels for display on a client device of a broadcasting system, the generating system comprising:
a group of client devices each configured to receive a plurality of channels from a source of programming, wherein the group contains all client devices in a particular geographic or broadcast service area; and
a processor of a broadcast service provider configured to monitor channels viewed via the client devices, to select a subset of the plurality of channels based on the amount of time each channel has been viewed and on the frequency with which each channel has been viewed, and to associate the subset together to generate an abridged list of the available channels for display, and to transmit the generated abridged list of channels to the client devices, such that the generated abridged list is available to each client device in the group, for display on a display of the client devices.

According to a third aspect of the present invention, there is provided a computer-readable storage medium including instructions for:
monitoring at a broadcast service provider channels viewed via a group of client devices each configured to receive a plurality of channels, wherein the group contains all client devices in a particular geographic or broadcast service area;
the broadcast service provider selecting a subset of the plurality of channels based on the amount of time each channel has been viewed and on the frequency with which each channel has been viewed; and
associating the subset together to generate an abridged list of the available channels for display, and to transmit the generated abridged list of channels to the client devices, such that the generated abridged list is available to each client device in the group, for display on a display of the client devices.

For example, some embodiments systems and methods may present a user with a condensed list of channels, for example, based on the user's viewing preferences. For example, viewing of channels by the user via the client device may be monitored to select a plurality of channels for presentation as a "favorites list" of channels. Such a "favorites list" of channels may be particular to the user or to the client device.

Some embodiments may provide such a condensed list of channels based on an amount of time spent on each channel and/or a frequency of viewing each channel. In particular, stickiness of channels as a function of time may be determined. Channels viewed may be ranked accordingly, and a limited number of channels may be presented as the condensed list of channels based on the ranking. For example, the top ten ranked channels may be included in the condensed list.

In some embodiments, the ranking may be updated continuously or periodically, for example, to account for any changes in the viewing habits of the user(s) of the client device. Thus, the condensed list of channels may be updated automatically.

In some embodiments, the condensed list of channels may be dynamic or time adjustable. In such embodiments, a different condensed list of channels may be presented to the user as time passes throughout the day, the week, the month and/or the year. Thus, the time of day, week, etc. may be taken into account to determine the condensed list of channels to be presented.

As a supplement to time and/or frequency, content of the channels viewed via the client device may be used to determine the condensed list of channels. For example, types, themes, genres, etc. of channels, as well a program content of channels, may be used. In some embodiments, the user's profile and/or preferences, stored on the client device or elsewhere, may be used, for example, to weight certain channels for inclusion in the condensed list of channels. For example, channels that include content that is of particular interest to the user based on his profile and/or preferences may receive more credit for the time and/or frequency of viewing.

In some embodiments, one or more condensed lists may be stored, either on the client device or elsewhere. Such embodiments may prevent the loss of such data, for example, if power is lost at the client device.

In some embodiments, the condensed list(s) of channels may be presented via the EPG of the client device. In such embodiments, a plurality of condensed lists may be presented to the user for selection, for example, as particular to a certain user and/or time of day. Alternatively or additionally, the client device may be configured to operate in an abridged mode in which the condensed list(s) of channels are presented to the user.

In some embodiments, a client device may be configured to perform monitoring of channels viewed via the client device and generating of one or more condensed lists of channels. In other embodiments, such operations may be performed remotely from the client device, for example, to provide the condensed list(s) of channels to the client device.

By using various embodiments, a subset of the available channels may be presented to a user of a client device based on viewing habits of the user.

### BRIEF DESCRIPTION OF THE DRAWINGS

Various details of the present invention may will be better understood on reading the following detailed description of non-limiting embodiments, and on examining the accompanying drawings, in which:
Figure 1 is a simplified block diagram illustrating various components of an example of a direct broadcast satellite television system;
Figure 2 is a simplified block diagram illustrating an example of operations for generating a condensed list of channels;
Figures 3-5 illustrate a flowchart of another example of operations for generating a condensed list of channels that may be associated with a specified time period;
Figures 6-8 illustrate a flowchart of another example of operations for generating a condensed list of channels that may be associated with a specified content; and
Figure 9 illustrates a flowchart of another example of operations for generating a condensed list of channels that may be associated with a specified user.

### DETAILED DESCRIPTION OF EMBODIMENTS

As used herein, the term "client device" is intended to encompass a device that is configured to receive programs and program information from a broadcast source (e.g., satellite, cable, Internet, etc.) and to display the programs and the program information on a display device, such as a television or a monitor. Although not restricted to a particular implementation, the term "client device" is intended to encompass set top boxes, satellite receivers, digital video recorders, and the like. The client devices described herein may be considered to be embodied in software and/or hardware that facilitate the reception and display of programs and program information from a broadcast source.

The embodiments shown in the Figures illustrate systems and methods that may allow one or more condensed lists of channels to be generated for a client device. A condensed list of channels is a subset of a plurality of channels that the client device is configured to receive from a broadcast source. Thus, a condensed list of channels may provide a user of the client device with an abridged listing of channels for display, and thus may reduce the time that may be required to locate channels and/or programs that the user may wish to view and/or record.

The subset may be determined or selected, for example, based on the channels viewed via the client device. Thus, in general, the channels viewed via the client device may provide an indication of a user's interests based on his viewing habits. As such, a condensed list of channels may comprise a subset of most viewed channels (e.g., top ten channels), thus creating a customized channel list or "favorites list" of channels. For the sake of brevity and clarity, only viewing of channels is discussed with respect to the embodiments shown in the Figures. However, it should be understood that recording of channels may also be monitored and included as part of the basis for determining or selecting the subset of channels.

Embodiments disclosed herein may automatically generate the condensed list(s) of channels. Thus, a user of a client device need not manually set up a "favorites list" of channels. However, it should be understood that various parameters to be used in generating condensed list(s) of channels may be set by user input. Such parameters may be used in combination with data regarding the channels viewed via the client device to information to determine or select a subset of channels to be included in a condensed list of channels.

In particular, parameters such as times of day, days of the week, months of the year, climate seasons, programming seasons, etc. may be set by the user of the client device, or may be preset by a broadcast service provider or other entity. Other parameters such as channel and/or program content may be set by the user, for example, to be used to generate a condensed list of channels related to a particular interest, such as sports, movies, etc. One or more categories based on content may be generated in part based on a user profile and/or user preferences, for example. Also, such categories may be preset by the broadcast service provider or other entity to generate a default set of condensed lists of channels that are available to the user of the client device. For example, separate condensed lists of channels may be generated for sports, movies, sitcoms, children, adult, news, etc., based on the channels viewed in each category, i.e., channels including such content.

While the description herein may refer to a single client device, it should be understood that the generation of condensed lists of channels may be applied to plural client devices. For example, channels viewed by a group of client devices may be monitored to generate one or more condensed lists of channels that is/are available to each in the group. The group may be defined as appropriate or desired, such as all client devices in a particular household or on a particular account, a geographic or broadcast service area, etc.

Also, one or more condensed lists of channels may be generated for a specific client device and/or a specific user of a client device. As such, each user of a client device may have one or more personalized condensed lists of channels made available to that user on the client device.

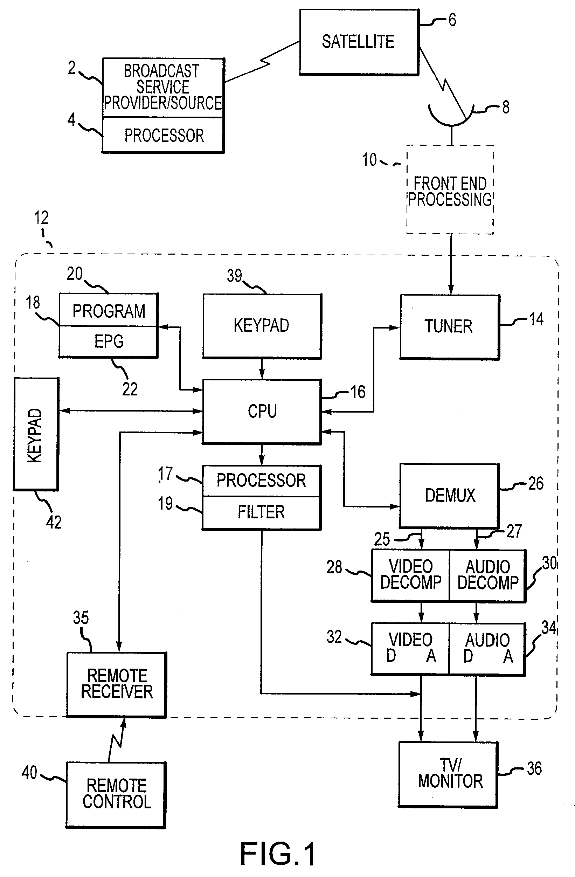

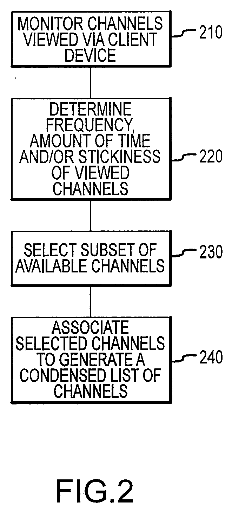

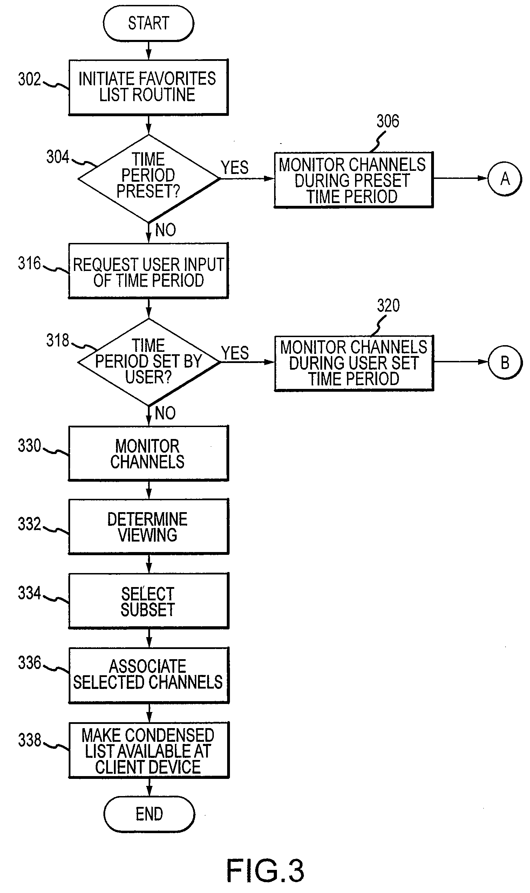

The block diagrams shown in Figures 1 and 2 and the flowcharts shown in Figures 3-9 are for illustration only and are not intended to represent the only possible system configurations and operational flows. In particular, it should be understood that operations may be added, omitted and reordered as may be suitable to a particular application. Also, individual components may be added, omitted, replaced and interrelated as may be suitable to a particular application. All details appurtenant to implementing the exemplary systems and methods that are well understood in the art are omitted for simplicity and clarity.

The embodiments shown in the Figures illustrate systems and methods that may provide a condensed list of channels via a client device. As described herein, the condensed list of channels may be generated based on the viewing of channels via the client device.

FIG. 1 is a simplified block diagram that shows various components that may be used to implement a broadcast system in which such a condensed list of channels may be generated. The example shown relates to a direct broadcast satellite system, although any programming source and/or broadcasts system may be employed.

A broadcast service provider 2 may transmit signals including programs and programming information to a satellite 6, which in turn may downlink the signals to a suitable satellite antenna 4. Front end processing may be employed to convert the received signals, as appropriate or desired, for transmission to a client device 12, such as a satellite receiver, via coaxial cable, for example. The client device 12 may include a tuner or tuners 14, which may be configured to select a specific channel from the downlinked signal. The tuner(s) 14 maybe controlled by a central processing unit (CPU) 16 of the client device 12, for example, based on user input.

The selected channel may be directed from the tuner 14 to a demultiplexer 26, as appropriate or desired. For example, the demultiplexer 26 may be an integrated circuit that accepts a packetized, time domain multiplexed data stream from the tuner 14 and routes the packets to various areas within the satellite receiver 12. The demultiplexer 26 may also descramble encrypted data, provide various buffering of data, and handle a program clock reference to keep a local clock synchronized with the clock at the broadcast service provider 2 or an uplink center (not shown). Programming data may be output from the demultiplexer 26 and routed to a central processing unit (CPU) 16, which may assemble the data into an EPG 22 stored in a memory 18.

Video may be output as a compressed video stream 25, which may be accepted by a video decompresser 28. Audio may be output as a compressed audio stream 27, which may be accepted by an audio decompresser 30. The video decompresser 28 and the audio decompresser 30 may accept video stream 25 and audio stream 27, respectively, and decompress them into baseband digital signals. The video stream 25 may then be fed to a video digital to analog converter 32 and the audio stream 27 may be fed to a video digital to analog converter 34. The converters 32 and 34 may decode the digital signals and output resulting analog baseband signals to a TV/monitor 36 and/or a VCR device 38.

The EPG 22 may be a database containing information including names or titles of viewing events (programs), corresponding channel numbers and names, brief descriptions of the programs, start and finish times, and rating and content information related to the events. The central processing unit 16 may execute an EPG program 20, which may take the information stored in the EPG 22 and the information to a processor 17. The processor 17 may process the information and output a signal, which, after being filtered by a filter 19, may become a video baseband signal that may be combined with the video baseband signal to be displayed on the television/monitor 36.

A user may manipulate the client device 12 via a remote control device 40 or a keypad 42. The remote control device 40 may communicate with the CPU 16 by sending an infrared or other RF signal to a remote receiver 35, which may transfer commands to the CPU 16.

The EPG program 20 may comprise an instruction set that creates the EPG 22 and allows a user to manipulate the EPG 22, as appropriate or desired, as known in the art. While the EPG program 20 may be implemented as hardware, the EPG program 20 may comprise a software program stored in the memory 18. The memory 18 may be DRAM, but also may be flash, ferroelectric, or other nonvolatile memory, or conventional RAM with a battery backup.

The CPU 16, or another processor 4 as part of the broadcast service provide, for example, may be configured to monitor the channels viewed by a user of the client device 12, for example, by monitoring the channels selected by the tuner 14. The client device 12 may be configured to allow the CPU 16 to determine whether the video and/or audio signals for the selected channel are output by the TV/monitor 36. This may avoid taking into account channels that are selected by the tuner 14, but not actually viewed by a user of the client device 12.

As discussed herein, the CPU 16 (or the processor 4) may be configured to monitor channels viewed via the client device 12 to implement a favorites list routine, i.e., a routine that generates a condensed list of channels based on the viewing of channels. The CPU 16 may apply various parameters for implementing the routine, such as preset parameters or parameters set by a user via the remote control device 40 or the keypad 42. Parameters such as a specified period of time, a specified user, a specified content, etc., as discussed herein, may be used.

As channels are viewed via the client device 12, the CPU 16 may track an amount of time each channel is viewed. If a period of time is specified, then the CPU 16 may only track an amount of time each channel is viewed during the specified period. If a user is specified, then the CPU 16 may only track an amount of time each channel is viewed when the specified user is using the client device 12. If content is specified, then the CPU 16 may only track amounts of viewing time for channels that include the specified content.

Additionally or alternatively, the CPU 16 may track a frequency that (i.e., how often) each channel is viewed. Further, the CPU 16 may be configured to determine the stickiness of viewed channels.

Based on the viewing of channels as determined by the CUP 16, a subset of all channels that are available to the client device may be selected. For example, a specified number of channels, specified either by the user of the client device 12, the broadcast service provider 2, or as a default on the client device 12, may be selected. For example, the ten "most viewed" channels may be selected. "Most viewed" may be measured by the amount of time each channel has been viewed, the frequency with which each channel has been viewed, and/or the stickiness of each viewed channel. The viewed channels may be ranked based on such criteria to facilitate the selection.

The CPU 16 may associate the selected channels to generate a desired condensed channel list. As discussed above, the desired condensed channel list may be generic to the client device 12, i.e., taking into account all channels viewed via the client device 12, or may be specific to a user and/or a particular content.

Once a condensed channel list is generated, the condensed channel list may be provided so as to be available for presentation to the user of the client device. For example, the CPU 16 may store the condensed channel list in the memory 18. It should be understood that the condensed channel list may be downloaded to the client device 12, for example, when generated by the processor 4 of the broadcast service provider 2 or other separate device. The CPU 16 may then access a default or selected condensed channel list, for example, from the EPG 22 to be displayed on the TV/monitor 36.

In some embodiments, a single or a default condensed channel list may be provided for display when the EPG 22 is summoned by a user (using the remote control device 40 or the keypad 42) and the EPG 22 or the client device 12 is in an "abridged" mode. Alternatively or additionally, multiple condensed channel lists may be displayed to the user for selection.

The monitoring of channels and determination regarding the viewing of channels may be performed simultaneously for generating multiple lists. For example, for a client device that is used by a plurality of identified users, such operations may be performed while a particular user is using the client device to obtain information for selecting channels to generate a condensed channel list for that user, and such obtained information may also be used for selecting channels to generate a condensed channel list for the client device 12. In other words, channels viewed by each user may form the basis for generating a personal condensed channel list and may contribute to generation of a general condensed channel list for the client device 12.

It should be understood that the monitoring of channels viewed via the client device may be performed continuously, periodically or only when the routine is initiated. As such, it should be understood that condensed channels lists that have been generated may be updated, for example, continuously periodically or only when the routine is initiated. Although updating a condensed channels list that has been generated may involve generating a new condensed channels list and replacing the previously generated list, it should be understood that individual channels of the list may be replaced or reordered without generating an entire new list.

It should be understood that various operations may be performed to accomplish any of the foregoing details. Such operations may be complex and interrelated, as appropriate or desired, to provide a user of a client device with varying degrees of input regarding the criteria for generating condensed channels lists. However, as described herein, the actual generation of condensed channels list is otherwise automatic. It should also be understood that various operations may be performed at the broadcast service provider, at the client device or at another separate device, as appropriate or desired.

Thus, for the sake of clarity and simplicity, a simplified block diagram of operations for generating a condensed list of channels is shown in FIG. 2, and operations associated with a specified time period, a specified content, and a specified user are separately shown in FIGS. 3-9. It should be understood, however, that the operations shown in FIGS. 3-9 may be combined in other implementations, for example, to obtain a condensed channel list for a specified user, to be displayed during a specified time period and populated only with channels including a specified content.

As illustrated in FIG. 2, a method of generating a condensed list of channels may be performed by four basic operations. However, it should be understood that such illustration is only an example and that the method may comprise fewer operations, for example, if the functionalities of multiple operations of FIG. 2 are combined or otherwise characterized as a single operation. Similarly, it should be understood that the various operations shown in FIGS. 3-9 are provided as only an example.

Initially, channels viewed via the client device may be monitored [BLOCK 210], as described above.

For each channel that is viewed via the client device, information such as the frequency of viewing, the amount of time spent viewing and/or the stickiness may be determined [BLOCK 220]. Based on such information, a subset of the channels available to the client device may be selected [BLOCK 230]. As described above, the selection may involve ranking the viewed channels using the determined information and selecting a desired number based on the ranking, e.g., top ten ranked channels.

The selected channels may then be associated together to generate a condensed list of channels [BLOCK 240]. Once generated, the condensed list of channels may be stored, downloaded or otherwise provided to the client device to be available for display to the user, as discussed above.

As discussed above, a condensed list of channels may be generated that is associated with a specified time period. An example of operations for such an approach is shown in FIGS. 3-5.

At the start of the process, a favorites list routine may be initiated [BLOCK 302]. The routine may be initiated by a user of the client device, automatically by the client device, for example, at start up or periodically, or by the broadcast service provider, either locally when the routine is performed at the service provider or remotely when the routine is performed by the client device or other device.

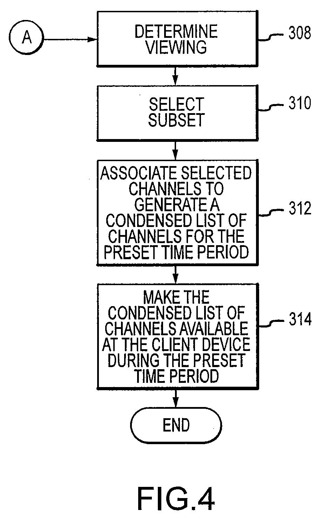

Next, a determination may be made as to whether a time period has been preset [BLOCK 304]. If so, channels may be monitored during the preset time period [BLOCK 306]. Then, as shown in FIG. 4, the viewing of channels via the client device may be determined [BLOCK 308], for example, as described above, and a subset of the available channels may be selected [BLOCK 310] based on the determined viewing, as also described above.

The selected channels may be associated together to generate a condensed list of channels for the preset time period [BLOCK 312]. Finally, the condensed list of channels may be made available at the client device during the preset time period [BLOCK 314]. The condensed list of channels may be stored at the client device, as described above, and then accessed for display during the preset time period, for example, upon receiving a command/request based on input from the user. Thus, it is envisioned that multiple condensed lists of channels may be generated for different preset time periods so that different condensed lists of channels may be displayed during the time periods based on viewing habits of the user(s) during the corresponding time periods.

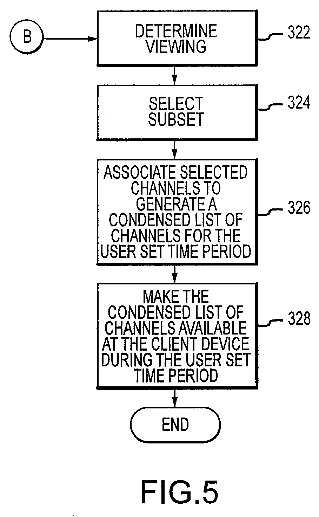

If a determination is made that no preset time period exists, then a request for user input of a time period may be made [BLOCK 316]. A determination may then be made as to whether a time period has been set by the user [BLOCK 318] in response to the request. If so, channels may be monitored during the time period set by the user [BLOCK 320]. Then, as shown in FIG. 5, the viewing of channels via the client device may be determined [BLOCK 322] and a subset of the available channels may be selected [BLOCK 324] based on the determined viewing, as described above.

The selected channels may be associated together to generate a condensed list of channels for the time period set by the user [BLOCK 326]. Finally, the condensed list of channels may be made available at the client device during the time period set by the user [BLOCK 328]. The condensed list of channels may be stored at the client device, as described above, and then accessed for display during the time period set by the user, for example, upon receiving a command/request based on input from the user. Thus, it is envisioned that multiple condensed lists of channels may be generated for different time periods set by the user so that different condensed lists of channels may be displayed during the time periods based on viewing habits of the user(s) during the corresponding time periods.

Various time periods may be envisioned. For example, hours of a day may be divided into daytime hours, morning hours, afternoon hours, evening hours, late night hours, or the like. As discussed above, different condensed lists of channels may be determined separately and presented during such periods, for example, to take into account viewing of channels only during the corresponding periods. For example, a condensed list of kids programs may be presented during morning hours, a condensed list including network channels may be presented during evening hours, and a condensed list of movie channels may be presented during latenight hours. Different condensed lists of channels may be presented for other time periods as well, such as for days of the week, months of the year, climate seasons of the year, programming seasons of the year, sports seasons, etc.

If no time period is set by the user, then the channels may be monitored [BLOCK 330], the viewing of channels may be determined [BLOCK 332], a subset of available channels may be selected [BLOCK 334], and the selected channels may be associated to generate a condensed channel list [BLOCK 336] irrespective of any time period, as described with respect to FIG. 2, for example. The condensed channel list may then be made available at the client device [BLOCK 338], as discussed above.

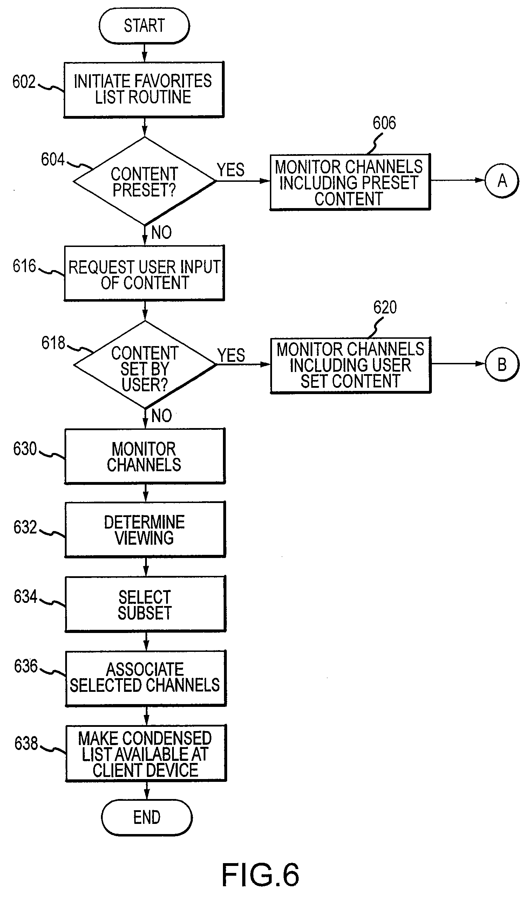

A condensed list of channels may also be generated that is associated with a specified content. An example of operations for such an approach is shown in FIGS. 6-8.

At the start of the process, a favorites list routine may be initiated [BLOCK 602]. As before, the routine may be initiated by a user of the client device, automatically by the client device, for example, at start up or periodically, or by the broadcast service provider, either locally when the routine is performed at the service provider or remotely when the routine is performed by the client device or other device.

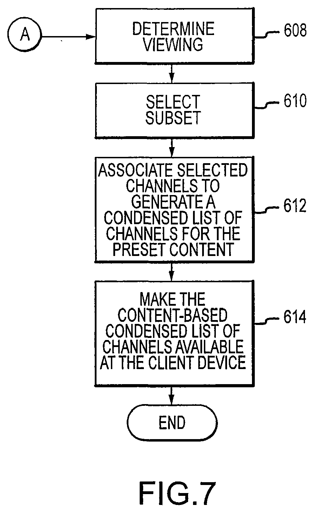

Next, a determination may be made as to whether a desired content has been preset [BLOCK 604]. If so, channels including the preset content may be monitored [BLOCK 606]. Alternatively, channels may be monitored for the preset content in the programs being transmitted via the respective channels. Then, as shown in FIG. 7, the viewing of channels via the client device may be determined [BLOCK 608] and a subset of the available channels may be selected [BLOCK 610] based on the determined viewing, as described above.

The selected channels may be associated together to generate a condensed list of channels for the preset content [BLOCK 612]. Finally, the condensed list of channels may be made available at the client device [BLOCK 614]. The condensed list of channels may be stored at the client device, as described above, and then accessed for display, for example, upon receiving a command/request based on input from the user. Thus, it is envisioned that multiple condensed lists of channels may be generated for different preset content so that different condensed lists of channels may be displayed for different preset content.

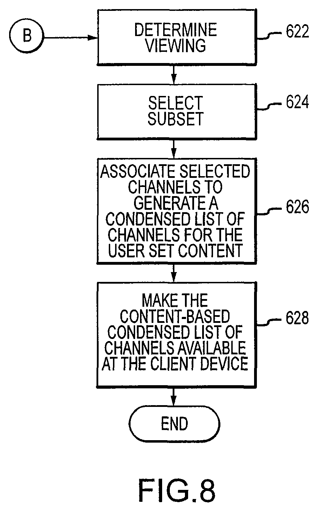

If a determination is made that no preset content period exists, then a request for user input of a desired content may be made [BLOCK 616]. A determination may then be made as to whether a content has been identified by the user [BLOCK 618] in response to the request. If so, channels may be monitored for the desired content set by the user [BLOCK 620]. Then, as shown in FIG. 8, the viewing of channels via the client device may be determined [BLOCK 622] and a subset of the available channels may be selected [BLOCK 624] based on the determined viewing, as described above.

The selected channels may be associated together to generate a condensed list of channels for the desired content set by the user [BLOCK 626]. Finally, the condensed list of channels may be made available at the client device [BLOCK 628]. The condensed list of channels may be stored at the client device, as described above, and then accessed for display, for example, upon receiving a command/request based on input from the user. Thus, it is envisioned that multiple condensed lists of channels may be generated for different content set by the user so that different condensed lists of channels may be displayed for different content set by the user.

If no content is set by the user, then the channels may be monitored [BLOCK 630], the viewing of channels may be determined [BLOCK 632], a subset of available channels may be selected [BLOCK 634], and the selected channels may be associated to generate a condensed channel list [BLOCK 636] irrespective of any content, as described with respect to FIG. 2, for example. The condensed channel list may then be made available at the client device [BLOCK 638], as discussed above.

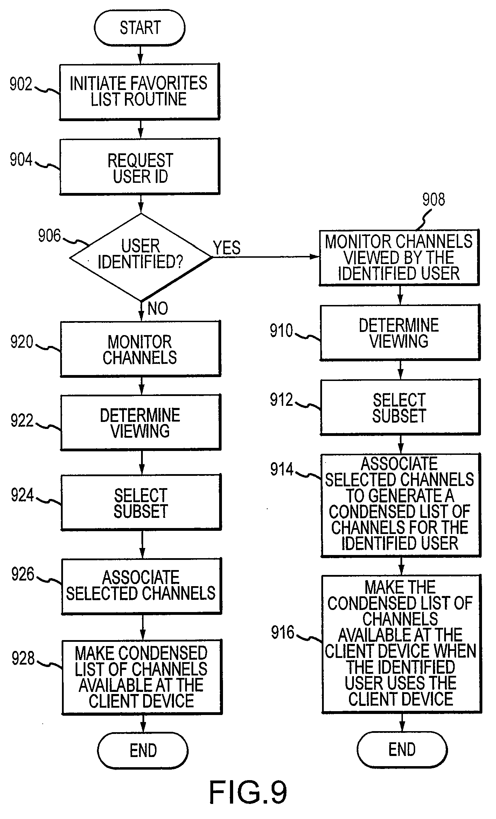

Further, a condensed list of channels may be generated that is associated with a specified user. An example of operations for such an approach is shown in FIG. 9.

At the start of the process, a favorites list routine may be initiated [BLOCK 902]. As before, the routine may be initiated by a user of the client device, automatically by the client device, for example, at start up or periodically, or by the broadcast service provider, either locally when the routine is performed at the service provider or remotely when the routine is performed by the client device or other device.

Next, a request for identification of the user of the client device may be requested [BLOCK 904]. A determination may then be made as to whether the user has been identified [BLOCK 906]. User identification may be accomplished by any suitable technique, whether known or hereafter developed. For example, a user may provide a password to the client device so that personal preferences and the like are activated when using the client device. In such case, the request for user identification may be omitted.

If the user is identified, channels viewed by the identified user may be monitored [BLOCK 908]. Then, the viewing of channels via the client device may be determined [BLOCK 910] and a subset of the available channels may be selected [BLOCK 912] based on the determined viewing, as described above.

The selected channels may be associated together to generate a condensed list of channels for the identified user [BLOCK 914]. Finally, the condensed list of channels may be made available at the client device [BLOCK 916]. The condensed list of channels may be stored at the client device, as described above, and then accessed for display, for example, whenever the identified user is using the client device and inputs a command/request for such display. It is envisioned that multiple condensed lists of channels may be generated for a particular user so that the particular user may have access to different condensed lists of channels, for example, for different time periods and/or different content.

If a determination is made that no user is identified, then channels may be monitored [BLOCK 920], viewing of channels may be determined [BLOCK 922], a subset of available channels may be selected [BLOCK 924], and the selected channels may be associated to generate a condensed channel list [BLOCK 926] irrespective of any particular user, as described with respect to FIG. 2, for example. The condensed channel list may then be made available at the client device [BLOCK 928], as discussed above.

Although not shown for the sake of clarity and simplicity, it should be understood that various other features described above may be incorporated in the process. Accordingly, the processes shown in FIGS. 2-9 should be understood as being illustrative only and not limiting.

## Claims

1. A method of generating an abridged list of channels for display on a client device (12) of a broadcasting system, the method comprising:
monitoring at a broadcast service provider (2) channels viewed via a group of client devices where each is configured to receive a plurality of channels, wherein the group contains all client devices in a particular geographic or broadcast service area; and
the broadcast service provider (2) selecting a subset of the plurality of channels based on the amount of time each channel has been viewed and on the frequency with which each channel has been viewed, **characterised by**
associating the subset together to generate an abridged list of the available channels for display; and,
transmitting the generated abridged list of channels to the client devices (12), such that the generated abridged list is available to each client device (12) in the group, for display on a display of the client devices..

2. A method as claimed in Claim 1, further comprising storing the generated abridged list of channels, and updating the stored abridged list of channels either periodically or continuously.

3. A method as claimed in Claim 1, wherein at least one of selecting and associating the subset is based at least in part on an identified user.

4. A method as claimed in Claim 1, wherein at least one of selecting and associating the subset is based at least in part on a predefined period of time, for example, comprising at least one of a climate season, a programming season and a sporting season.

5. A method as claimed in Claim 1, wherein selecting the subset is based at least in part on the content of the monitored channels.

6. A method as claimed in Claim 1, wherein selecting the subset comprises ranking the monitored channels and identifying a defined number of channels for selection based on the ranking.

7. A system for generating an abridged list of channels for display on a client device of a broadcasting system, the generating system comprising:
a group of client devices (12) each configured to receive a plurality of channels from a source of programming, wherein the group contains all client devices in a particular geographic or broadcast service area; and
a processor (4) of a broadcast service provider (2) configured to monitor channels viewed via the client devices, to select a subset of the plurality of channels based on the amount of time each channel has been viewed and on the frequency with which each channel has been viewed, and to associate the subset together to generate an abridged list of the available channels for display, and to transmit the generated abridged list of channels to the client devices (12), such that the generated abridged list is available to each client device (12) in the group, for display on a display of the client devices.

8. A system as claimed in Claim 7, wherein the processor (4) is configured to store the generated abridged list of channels, and wherein the stored abridged list of channels is updated either periodically or continuously.

9. A system as claimed in Claim 8, wherein the processor (4) is configured to store the generated abridged list of channels on the client devices.

10. A system as claimed in Claim 7, wherein the processor (4) is configured to select and associate the subset automatically.

11. A system as claimed in Claim 7, wherein the processor (4) is configured to select and associate the subset based on at least one of a time of day, a day of the week, and a month of the year that the monitored channels are viewed.

12. A system as claimed in Claim 7, wherein the processor (4) is configured to select and associate the subset based on an identified user.

13. A computer-readable storage medium including instructions for:
monitoring at a broadcast service provider (2) channels viewed via a group of client devices each configured to receive a plurality of channels, wherein the group contains all client devices in a particular geographic or broadcast service area;
the broadcast service provider (2) selecting a subset of the plurality of channels based on the amount of time each channel has been viewed and on the frequency with which each channel has been viewed; and
associating the subset together to generate an abridged list of the available channels for display, and to transmit the generated abridged list of channels to the client devices (12), such that the generated abridged list is available to each client device in the group, for display on a display of the client devices.

## Patentansprüche

1. Verfahren zum Erzeugen einer gekürzten Liste von Kanälen zur Anzeige auf einer Client-Vorrichtung (12) eines Rundfunksystems, wobei das Verfahren folgendes umfasst:
bei einem Rundfunkanbieter (2) das Überwachen der von einer Gruppe von Client-Vorrichtungen angesehenen Kanäle, wobei jede Vorrichtung so konfiguriert ist, dass sie eine Mehrzahl von Kanälen empfängt, wobei die Gruppe alle Client-Vorrichtungen in einem bestimmten geografischen oder Rundfunkprogrammgebiet enthält; und
wobei der Rundfunkanbieter (2) eine Untergruppe der Mehrzahl von Kanälen auswählt auf der Basis der Zeit, die jeder Kanal gesehen wird und der Frequenz, mit der jeder Kanal gesehen wird, **gekennzeichnet durch**:
gegenseitiges Zuordnen der Untergruppe, um eine gekürzte Liste der zur Anzeige verfügbaren Kanäle zu erzeugen; und
Übermitteln der erzeugten gekürzten Liste von Kanälen an die Client-Vorrichtungen (12), so dass die erzeugte gekürzte Liste für jede Client-Vorrichtung (12) in der Gruppe verfügbar ist zum Anzeigen auf einem Bildschirm der Client-Vorrichtungen.

2. Verfahren nach Anspruch 1, ferner umfassend das Speichern der erzeugten gekürzten Liste von Kanälen und das Aktualisieren der gespeicherten gekürzten Liste von Kanälen entweder periodisch oder kontinuierlich.

3. Verfahren nach Anspruch 1, wobei wenigstens das Auswählen oder Zuordnen der Untergruppe wenigstens teilweise auf einem identifizierten Benutzer basiert.

4. Verfahren nach Anspruch 1, wobei wenigstens das Auswählen oder Zuordnen der Untergruppe wenigstens teilweise auf einem identifizierten Zeitraum basiert, der zum Beispiel wenigstens eine klimatische Jahreszeit, eine Programmstaffel und eine Sportsaison umfasst.

5. Verfahren nach Anspruch 1, wobei das Auswählen der Untergruppe wenigstens teilweise auf dem Inhalt der überwachten Kanäle basiert.

6. Verfahren nach Anspruch 1, wobei das Auswählen der Untergruppe eine Rangordnung der überwachten Kanäle und das Identifizieren einer definierten Anzahl von Kanälen für eine auswahlbasierte Rangordnung.

7. System zum Erzeugen einer gekürzten Liste von Kanälen zur Anzeige auf einer Client-Vorrichtung eines Rundfunksystems, wobei das System zum Erzeugen folgendes umfasst:
eine Gruppe von Client-Vorrichtungen (12), die jeweils so konfiguriert sind, dass sie eine Mehrzahl von Kanälen von einer Programmquelle empfangen, wobei die Gruppe alle Client-Vorrichtungen in einem bestimmten geografischen oder Rundfunkprogrammgebiet enthält; und
einen Prozessor (4) eines Rundfunkanbieters (2), der so konfiguriert ist, dass er die über die Client-Vorrichtungen angesehenen Kanäle überwacht, um eine Untergruppe der Mehrzahl von Kanälen auszuwählen auf der Basis der Zeit, die jeder Kanal gesehen wird und der Frequenz, mit der jeder Kanal gesehen wird, und um die Untergruppe gegenseitig Zuzuordnen, um eine gekürzte Liste der zur Anzeige verfügbaren Kanäle zu erzeugen, und um die erzeugte gekürzte Liste von Kanälen an die Client-Vorrichtungen (12) zu übermitteln, so dass die erzeugte gekürzte Liste für jede Client-Vorrichtung (12) in der Gruppe verfügbar ist zum Anzeigen auf einem Bildschirm der Client-Vorrichtungen.

8. System nach Anspruch 7, wobei der Prozessor (4) konfiguriert ist zum Speichern der erzeugten gekürzten Liste von Kanälen, und wobei die gespeicherte gekürzte Liste von Kanälen entweder periodisch oder kontinuierlich aktualisiert wird.

9. System nach Anspruch 8, wobei der Prozessor (4) konfiguriert ist, um die erzeugte gekürzte Liste von Kanälen in den Client-Vorrichtungen zu speichern.

10. System nach Anspruch 7, wobei der Prozessor (4) konfiguriert ist, um die Untergruppe automatisch auszuwählen und zuzuordnen.

11. System nach Anspruch 7, wobei der Prozessor (4) konfiguriert ist, um die Untergruppe auszuwählen und zuzuordnen auf der Basis wenigstens einer Uhrzeit eines Tages, eines Wochentages oder eines Monats in Jahr, wenn die überwachten Kanäle gesehen werden.

12. System nach Anspruch 7, wobei der Prozessor (4) konfiguriert ist, um die Untergruppe auszuwählen und zuzuordnen auf der Basis eines identifizierten Benutzers.

13. Computerlesbares Speichermedium, das Anweisungen zu folgenden Zwecken aufweist:
bei einem Rundfunkanbieter (2) das Überwachen der von einer Gruppe von Client-Vorrichtungen angesehenen Kanäle, wobei jede Vorrichtung so konfiguriert ist, dass sie eine Mehrzahl von Kanälen empfängt, wobei die Gruppe alle Client-Vorrichtungen in einem bestimmten geografischen oder Rundfunkprogrammgebiet enthält;
wobei der Rundfunkanbieter (2) eine Untergruppe der Mehrzahl von Kanälen auswählt auf der Basis der Zeit, die jeder Kanal gesehen wird und der Frequenz, mit der jeder Kanal gesehen wird; und
gegenseitiges Zuordnen der Untergruppe, um eine gekürzte Liste der zur Anzeige verfügbaren Kanäle zu erzeugen, und um die erzeugte gekürzte Liste von Kanälen an die Client-Vorrichtungen (12) zu übermitteln, so dass die erzeugte gekürzte Liste für jede Client-Vorrichtung in der Gruppe verfügbar ist zum Anzeigen auf einem Bildschirm der Client-Vorrichtungen.

## Revendications

1. Procédé de génération d'une liste abrégée de canaux pour affichage sur un dispositif client (12) d'un système de radiodiffusion, le procédé comprenant les étapes consistant à :
surveiller au niveau d'un fournisseur de services de radiodiffusion (2) les canaux visualisés par l'intermédiaire d'un groupe de dispositifs clients dont chacun est configuré pour recevoir une pluralité de canaux, le groupe contenant tous les dispositifs clients dans une zone géographique ou de service de radiodiffusion particulière ; et
sélectionner par le fournisseur de services de radiodiffusion (2) un sous-ensemble de la pluralité de canaux en fonction de la durée de visualisation de chaque canal et de la fréquence de visualisation de chaque canal, **caractérisé en ce qu'**il comprend les étapes consistant à
associer le sous-ensemble pour générer une liste abrégée des canaux disponibles pour affichage ; et,
transmettre la liste abrégée de canaux générée aux dispositifs clients (12), de sorte que la liste abrégée générée soit disponible pour chaque dispositif client (12) dans le groupe, pour affichage sur un écran des dispositifs clients.

2. Procédé selon la revendication 1, comprenant en outre les étapes consistant à stocker la liste abrégée de canaux générée, et à mettre à jour la liste abrégée de canaux générée, périodiquement ou en permanence.

3. Procédé selon la revendication 1, au moins l'une de la sélection et de l'association du sous-ensemble reposant au moins en partie sur un utilisateur identifié.

4. Procédé selon la revendication 1, au moins l'une de la sélection et de l'association du sous-ensemble reposant au moins en partie sur une période prédéfinie, par exemple, comprenant au moins l'une d'une saison climatique, d'une saison de programmation et d'une saison sportive.

5. Procédé selon la revendication 1, la sélection du sous-ensemble étant basée au moins en partie sur le contenu des canaux surveillés.

6. Procédé selon la revendication 1, la sélection du sous-ensemble comprenant les étapes consistant à classer les canaux surveillés et à identifier un nombre défini de canaux à des fins de sélection en fonction du classement.

7. Système de génération d'une liste abrégée de canaux pour affichage sur un dispositif client d'un système de radiodiffusion, le système de génération comprenant :
un groupe de dispositifs clients (12) chacun étant configuré pour recevoir une pluralité de canaux d'une source de programmation, le groupe contenant tous les dispositifs clients dans une zone géographique ou de service de radiodiffusion particulière ; et
un processeur (4) d'un fournisseur de service de radiodiffusion (2) configuré pour surveiller les canaux visualisés par l'intermédiaire des dispositifs clients, pour sélectionner un sous-ensemble de la pluralité de canaux en fonction de la durée de visualisation de chaque canal et de la fréquence de visualisation de chaque canal, et pour associer le sous-ensemble pour générer une liste abrégée des canaux disponibles pour affichage, et pour transmettre la liste abrégée de canaux générée aux dispositifs clients (12), de sorte que la liste abrégée générée soit disponible à chaque dispositif client (12) dans le groupe, pour affichage sur un écran des dispositifs clients.

8. Système selon la revendication 7, le processeur (4) étant configuré pour stocker la liste abrégée de canaux générée, et la liste abrégée de canaux stockée étant mise à jour périodiquement ou en permanence.

9. Système selon la revendication 8, le processeur (4) étant configuré pour stocker la liste abrégée de canaux générée sur les dispositifs clients.

10. Système selon la revendication 7, le processeur (4) étant configuré pour sélectionner et associer le sous-ensemble automatiquement.

11. Système selon la revendication 7, le processeur (4) étant configuré pour sélectionner et associer le sous-ensemble en fonction d'au moins une heure de la journée, un jour de la semaine et un mois de l'année auquel les canaux surveillés sont visualisés.

12. Système selon la revendication 7, le processeur (4) étant configuré pour sélectionner et associer le sous-ensemble en fonction d'un utilisateur sélectionné.

13. Support de stockage lisible par ordinateur, comprenant des instructions pour :
surveiller au niveau d'un fournisseur de services de radiodiffusion (2) les canaux visualisés par l'intermédiaire d'un groupe de dispositifs clients dont chacun est configuré pour recevoir une pluralité de canaux, le groupe contenant tous les dispositifs clients dans une zone géographique ou de service de radiodiffusion particulière ;
sélectionner par le fournisseur de services de radiodiffusion (2) un sous-ensemble de la pluralité de canaux en fonction de la durée de visualisation de chaque canal et de la fréquence de visualisation de chaque canal ; et
associer le sous-ensemble pour générer une liste abrégée des canaux disponibles pour affichage, et transmettre la liste abrégée de canaux générée aux dispositifs clients (12), de sorte que la liste abrégée générée soit disponible pour chaque dispositif client dans le groupe, pour affichage sur un écran des dispositifs clients.
